# FASCICULE DE BREVET EUROPEEN

(11) **EP 0 859 920 B1**
(45) Date de publication et mention de la délivrance du brevet: **12.12.2001**
(21) Numéro de dépôt: 97943028.7
(22) Date de dépôt: 30.09.1997
(51) Int. Cl.: F16F 15/131, F16F 15/139

(54) **DOUBLE VOLANT AMORTISSEUR, NOTAMMENT POUR VEHICULE AUTOMOBILE, COMPORTANT DES MOYENS PERFECTIONNES D'AMORTISSEMENT PAR FRICTION DES VIBRATIONS**
ZWEIMASSENSCHWUNGRAD, INSBESONDERE FÜR KRAFTFAHRZEUGE, MIT VERBESSERTER REIBUNGSDÄMPFUNG VON SCHWINGUNGEN
MOTOR VEHICLE DOUBLE DAMPING FLYWHEEL, COMPRISING IMPROVED MEANS FOR FRICTION DAMPING OF VIBRATIONS

(30) Priorité: 30.09.1996 FR 9612098
(43) Date de publication de la demande: 26.08.1998
(73) Titulaire: VALEO, 75017 Paris (FR)
(72) Inventeur: SOARES, Cesario, F-28300 Fresnay le Gilmert (FR); BERTIN, Patrice, F-95540 Méry-sur-Oise (FR); TARDIVEAU, Christophe, F-75018 Paris (FR)
(74) Mandataire: Gamonal, Didier
(86) Numéro de dépôt international: FR9701724
(87) Numéro de publication internationale: WO9814719

(56) Documents cités:
- EP-A- 0 797 024
- DE-A- 3 629 225
- FR-A- 2 742 510
- FR-A- 2 746 159
- US-A- 4 932 286
- US-A- 5 135 092

## Description

La présente invention se rapporte à un double-volant, notamment pour véhicule automobile, comportant deux masses tournantes coaxiales montées mobiles en rotation l'une par rapport à l'autre autour d'un axe commun de symétrie axiale avec intervention de moyens d'accouplement entre les deux masses.

On connaît du brevet européen EP 0 797 024 déposé le 14 mars 1997 un double-volant, notamment double-volant amortisseur pour véhicule automobile, comportant deux masses tournantes coaxiales montées mobiles en rotation l'une par rapport à l'autre autour d'un axe commun de symétrie axiale avec intervention entre les deux masses de moyens d'accouplement et de moyens de frottement à action axiale portés en majeure partie par l'une des masses, dans lequel une première des deux masses est destinée à être liée en rotation à un arbre menant, tandis que la seconde des deux masses est destinée à être liée en rotation de manière débrayable à un arbre mené et comporte un plateau formant le plateau de réaction d'un embrayage à friction et dans lequel la seconde masse est montée rotative sur la première masse, et du type dans lequel les moyens de frottement comportent :
- une rondelle de commande, dite première rondelle de frottement, dont une partie est admise à frotter sur une face de frottement de ladite une des masses et qui est liée en rotation à l'autre des deux masses ;
- une rondelle de frottement, dite seconde rondelle de frottement, située radialement au-dessus de la rondelle de commande, qui engrène, avec jeu circonférentiel, avec la rondelle de commande, et qui est sollicitée au contact de ladite face de frottement ; et
- une rondelle de fermeture fixée à ladite une des deux masses, la rondelle de commande et la rondelle dé frottement étant placées axialement entre ladite face de frottement et la rondelle de fermeture.

La conception proposée dans ce document permet, grâce aux moyens de frottement, d'amortir les vibrations en créant un frottement permanent, généralement faible, pour amortir les vibrations notamment dans la plage du ralenti moteur et, au-delà de cette plage de ralenti, de créer de manière différée un frottement de plus grande intensité, le volant amortisseur restant d'une grande simplicité, en ayant un nombre réduit de pièces.

D'une manière générale, le frottement permanent permet d'amortir les petites oscillations et le frottement différé d'amortir les grandes oscillations.

La conception des moyens d'amortissement proposée dans ce document a toutefois pour inconvénient de faire appel à un nombre élevé de composants qui, outre leur nombre et leur coût, compliquent grandement leur assemblage.

Ainsi, tant la première rondelle de frottement que la seconde rondelle de frottement sont chacune associées à une rondelle d'application et à une rondelle élastique à action axiale, ces quatre composants supplémentaires étant interposés axialement entre les deux rondelles de frottement associées et la rondelle de fermeture.

La présente invention a pour objet, de manière simple et économique, de pallier à ces inconvénients et de répondre à ces souhaits.

C'est donc un but de l'invention de réduire le nombre de pièces des moyens de frottement.

Suivant l'invention, un double-volant du type mentionné ci-dessus est caractérisé en ce que la rondelle de commande est admise à frotter d'une part sur ladite face de frottement et, d'autre part, sur la rondelle de fermeture, et en ce que la rondelle de commande est pincée élastiquement entre ladite face de frottement et la rondelle de fermeture.

Selon d'autres caractéristiques de l'invention :
- la partie périphérique externe de la rondelle de commande est admise à frotter d'une part sur ladite face de frottement et, d'autre part, sur la rondelle de fermeture qui sollicite la rondelle de commande par sa périphérie externe, la rondelle de commande étant pincée élastiquement entre ladite face de frottement et la périphérie interne de la rondelle de fermeture ;
- la rondelle de commande présente à sa périphérie externe deux surfaces actives annulaires de frottement décalées axialement, notamment des ondulations radiales ou circonférentielles, qui sont admises à frotter d'une part sur ladite face de frottement et, d'autre part, sur la rondelle de fermeture ;
- la rondelle de fermeture présente à sa périphérie externe un rebord, globalement d'orientation transversale, pour fixation de la rondelle de fermeture à ladite une des deux masses et qui se raccorde, notamment par une zone d'orientation axiale, à un fond, globalement d'orientation radiale, troué centralement et qui est incliné en direction de ladite une des deux masses de manière qu'il existe une distance axiale, entre la périphérie externe du fond et ladite face de frottement, qui est plus importante que la distance axiale entre la périphérie interne du fond et ladite face de frottement ;
- la distance axiale entre les deux surfaces actives de frottement, notamment entre deux sommets opposés des ondulations, de la rondelle de commande est supérieure à la distance axiale entre la périphérie interne du fond et ladite face de frottement ;
- la rondelle de frottement est soumise à l'action d'une rondelle élastique à action axiale prenant appui directement sur la rondelle de fermeture pour solliciter la rondelle de frottement au contact de ladite face de frottement ;
- la rondelle élastique est solidaire en rotation de la rondelle de fermeture ;
- la rondelle élastique comporte, à sa périphérie externe, des pattes radiales inclinées qui rentrent dans des emboutis de la rondelle de commande ;
- la rondelle de frottement présente à sa périphérie interne des pattes par lesquelles elle engrène avec des parties complémentaires de la rondelle de commande ;
- les zones actives de frottement de la rondelle de commande sont des ondulations dont les sommets forment les surfaces actives de frottement de la rondelle de commande qui frottent en permanence contre ladite face de frottement et contre la rondelle de fermeture, et les pattes de la rondelle de frottement engrènent avec les ondulations ;
- les zones actives de frottement de la rondelle de commande sont deux zones annulaires décalées radialement, et la rondelle de commande comporte, radialement vers l'extérieur et au-delà de sa périphérie externe, des pattes qui engrènent avec les pattes de la rondelle de frottement ;
- ladite une des deux masses est ladite première masse.

La description qui va suivre illustre l'invention en regard des dessins annexés dans lesquels :
- la figure 1 est une vue en coupe axiale, selon la ligne 1-1 de la figure 2, d'un premier mode de réalisation de l'invention ;
- la figure 2 est une vue selon la flèche 2 de la figure 1 sans la deuxième masse et la coupelle avec sa pièce supplémentaire ;
- la figure 3 est une vue à plus grande échelle de la partie centrale de la figure 1 ;
- la figure 4 est une vue montrant le soudage de la bague externe du roulement centralement à un moyeu de la deuxième masse formant la partie interne de celle-ci avec, en pointillés, un dispositif de frottement optionnel ;
- la figure 5 est une vue montrant le soudage final de la bague interne du roulement à une surépaisseur centrale de la première masse ;
- la figure 6 est une vue partielle de la surépaisseur de la première masse montrant la saillie de celle-ci ;
- la figure 7 est une vue de face de la rondelle de commande du dispositif de frottement adjacent à la première masse ;
- la figure 8 est une vue de face de la rondelle de frottement du dispositif de frottement ;
- la figure 9 est une vue de face de la rondelle de fermeture du dispositif ;
- la figure 10 est une vue selon l'encart 10 de la figure 9 ;
- la figure 11 est une vue en coupe selon la ligne 11-11 de la figure 9 ;
- la figure 12 est une vue de face de la rondelle Belleville du dispositif de frottement ;
- les figures 13 et 14 sont des vues similaires à celles des figures 1 et 2 qui illustrent un deuxième mode de réalisation des moyens de frottement conformes aux enseignements de l'invention ;
- les figures 15 et 16 sont des vues à plus grande échelle respectivement des parties supérieure et inférieure de la figure 13 ;
- la figure 17 est une vue à grande échelle d'une partie de la rondelle de fermeture du deuxième mode de réalisation ;
- la figure 18 est une vue en section selon la ligne 18-18 de la figure 17 ;
- la figure 19 est une vue, selon la flèche 19 de la figure 15, qui illustre la rondelle de commande du deuxième mode de réalisation des moyens de frottement ;
- la figure 20 est une vue en section selon la ligne 20-20 de la figure 19 ;
- la figure 21 est une vue à plus grande échelle du détail 21 de la figure 19 ;
- la figure 22 est une vue de détail en section selon la ligne 22-22 de la figure 21 ;
- les figures 23 et 24 sont des vues similaires à celles des figures 13 et 14 qui illustrent une variante du deuxième mode de réalisation des moyens de frottement ;
- la figure 25 est une vue de détail à très grande échelle de la partie supérieure de la figure 23 ; et
- les figures 26 et 27 sont des vues similaires à celles des figures 19 et 20 qui illustrent la variante du second mode de réalisation de la rondelle de commande des moyens de frottement.

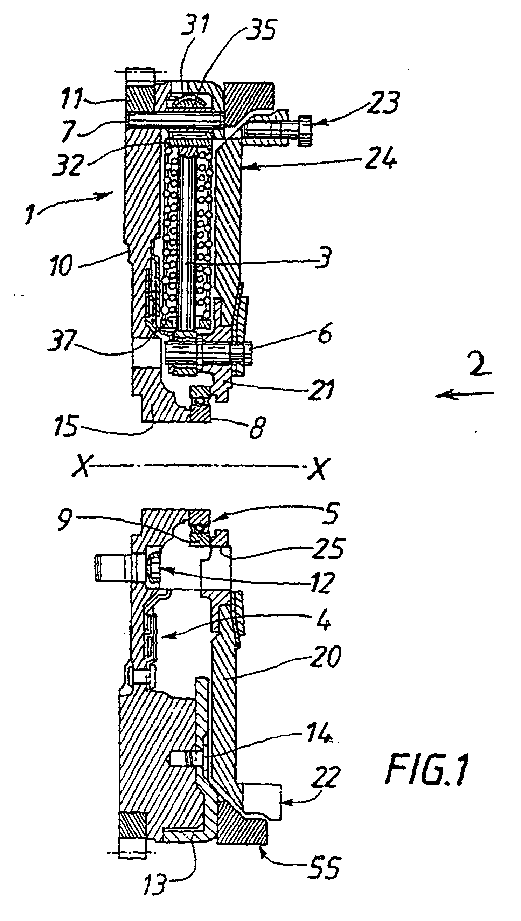

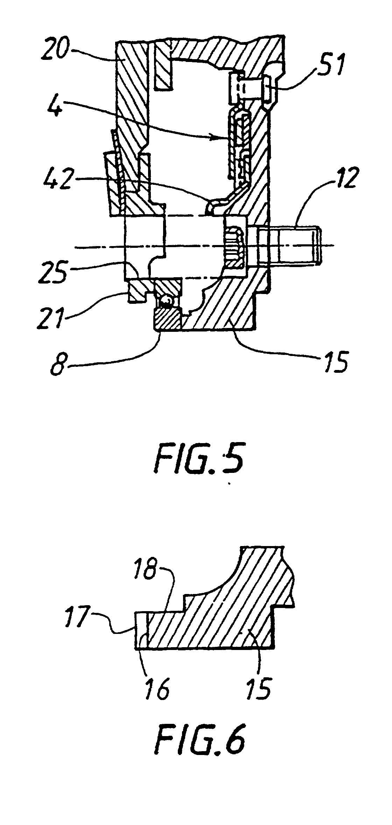

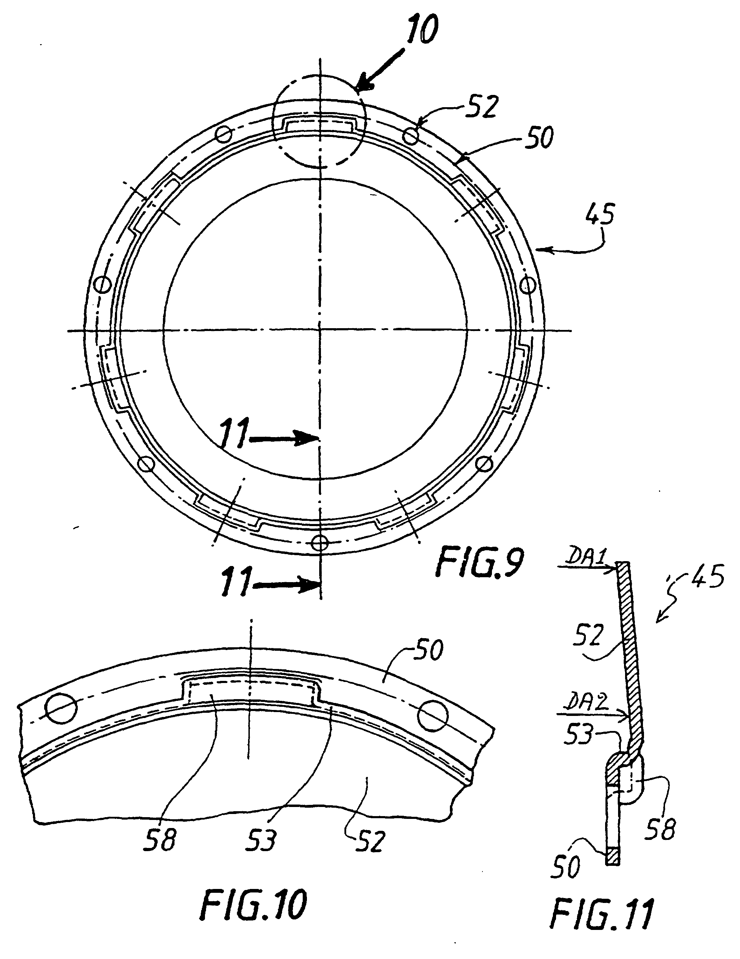

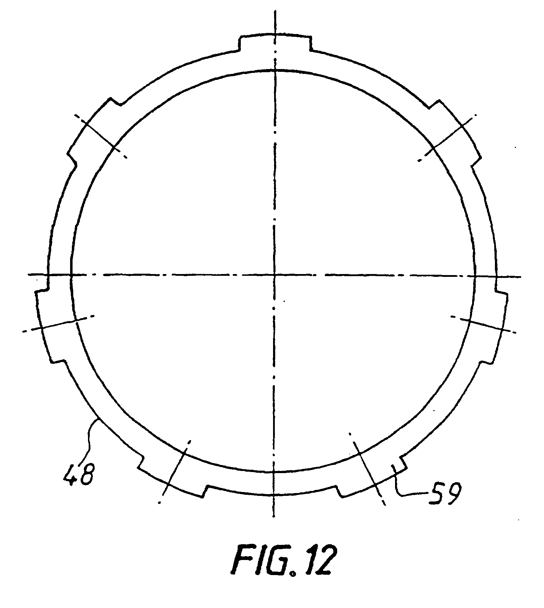

Sur les figures 1 à 12 on a représenté un premier mode de réalisation double-volant amortisseur de torsion pour véhicule automobile.

Ainsi qu'on le sait, dans un véhicule automobile un embrayage à friction est monté dans la chaîne cinématique allant du vilebrequin du moteur à l'arbre d'entrée de la transmission.

L'embrayage forme un organe de coupure et de démarrage. Il comporte usuellement un ensemble de pièces annulaires, à savoir un couvercle, un diaphragme prenant appui sur le couvercle, un plateau de pression soumis à l'action du diaphragme et lié en rotation - avec mobilité axiale - au couvercle, le plus souvent par des languettes élastiques, un disque de friction présentant à sa périphérie externe des garnitures de frottement et un plateau de réaction.

Normalement l'embrayage est engagé car le diaphragme sollicite le plateau de pression en direction du plateau de réaction pour serrage des garnitures de frottement du disque de friction entre lesdits plateaux de pression et de réaction.

Ainsi, le couple est transmis de l'arbre menant (le vilebrequin du moteur) à l'arbre mené (l'arbre d'entrée de la transmission) car le disque de friction présente un moyeu calé en rotation par des cannelures sur l'arbre d'entrée de la transmission, le plus souvent une boîte de vitesses.

Pour débrayer l'embrayage, on agit à l'aide d'une butée de débrayage sur l'extrémité interne des doigts du diaphragme - en poussant ou en tirant suivant le type d'embrayage - pour annuler la charge qu'exerce le diaphragme sur le plateau de pression.

Ainsi, dans un embrayage à friction, le plateau de réaction est lié de manière débrayable à un arbre mené et offre, pour ce faire, une face de friction à la garniture de frottement concernée du disque de friction.

Dans un embrayage classique, ce plateau de réaction forme un Volant solidaire par des vis de fixation du vilebrequin du moteur.

Pour mieux filtrer les vibrations, on a proposé de diviser le volant en deux parties, l'une comportant le plateau de réaction, l'autre une masse primaire destinée à être fixée à un arbre menant, à savoir le vilebrequin du moteur dans le cas d'une application à un véhicule automobile.

Le plateau de réaction appartient à une seconde masse montée tourillonnante sur la première masse par l'intermédiaire de moyens de palier, le plus souvent sous la forme d'un roulement à billes.

La filtration des vibrations est réalisée à l'aide de moyens élastiques d'amortissement et de moyens de frottement intervenant entre les deux masses.

Lesdits moyens élastiques constituent des moyens d'accouplement intervenant entre les deux masses.

Les moyens élastiques d'amortissement peuvent être implantés et agir circonférentiellement entre les deux masses.

Dans ce cas, par exemple la première masse présente des appuis en vis-à-vis pour les extrémités circonférentielles des moyens élastiques d'amortissement, classiquement sous la forme de ressorts à boudins. Ces appuis sont portés respectivement par un plateau de la première masse et un disque solidaire dudit plateau.

Un disque secondaire solidaire de la seconde masse pénètre entre le plateau et le disque de la première masse pour agir par des bras également sur les extrémités circonférentielles des ressorts à boudins.

En variante, les moyens élastiques d'amortissement peuvent être implantés et agir globalement radialement entre les deux masses.

Les moyens de frottement sont usuellement à action axiale et comportent au moins une rondelle de frottement soumise à l'action de moyens élastiques à action axiale.

Un tel dispositif est appelé double-volant amortisseur de torsion. En variante les moyens de frottement peuvent être à action radiale lorsque les moyens d'accouplement sont du type centrifuge.

Dans les figures, le double-volant comporte deux masses tournantes coaxiales 1,2 montées mobiles en rotation l'une par rapport à l'autre, autour d'un axe commun de symétrie axiale X-X, à l'encontre de moyens élastiques d'amortissement 3 et de moyens de frottement 4 à action axiale.

La seconde masse 2 est montée tournante sur la première masse 1 à l'aide de moyens de palier 5, ici un roulement à billes 5, intervenant centralement entre les deux masses 1,2, c'est-à-dire au niveau de la périphérie interne de chaque masse.

Le roulement à billes 5 est ici du type standard et comporte des billes montées radialement entre une bague interne 8 et une bague externe 9 massives et concentriques.

La seconde masse 2 est ici en deux parties concentriques 20,21.

L'une des parties, à savoir la partie radialement la plus externe 20, constitue le plateau de réaction précité de l'embrayage à friction, tandis que l'autre partie 21 constitue un moyeu central pour la première partie montée tournante sur ledit moyeu 21 de manière décrite ci-après.

Le roulement 5 intervient entre la périphérie interne du moyeu 21 de la seconde masse 2 et la partie centrale (la périphérie interne) de la première masse 1.

La première masse 1 comporte également un plateau 10. Les plateaux 10,20 sont en matière moulable, ici en fonte pour augmenter les inerties. Les plateaux 10,20 sont parallèles entre eux et décalés axialement l'un par rapport à l'autre.

En variante, le plateau 10 peut être à base d'aluminium.

Le plateau 10 porte, à sa périphérie externe, une couronne de démarreur 11 propre à être entraînée par le démarreur du véhicule.

Le plateau 20 présente, à sa périphérie externe, un rebord annulaire 22 pour fixation du couvercle (non visible) de l'embrayage.

On a représenté ici, en 23, l'une des vis de fixation du couvercle et, en 24, la face de friction qu'offre le plateau de réaction 20 à la garniture de frottement concernée du disque de friction.

Le moyeu 21 présente, radialement au-dessus du roulement à billes 5, des passages 25 permettant un accès aux têtes des vis de fixation 12 de la première masse 1 au vilebrequin du moteur. Le filetage des vis 12 traverse des trous (non référencés) pratiqués au voisinage de la partie centrale du plateau 10 en coïncidence axiale avec les passages 25. Les têtes des vis 12 prennent appui sur le plateau 10 et présentent chacune une empreinte pour un outil associé traversant un passage 25 de la seconde masse 2 et permettant le vissage des vis 12.

Le moyeu 21 présente, à sa périphérie externe, une gorge 26 ouverte vers l'extérieur en direction opposée à la masse 1. Le moyeu 21 comporte donc, à sa périphérie externe, d'une part, une collerette saillante radialement et formant le flanc de la gorge 26 et, d'autre part, un fond formant une portée cylindrique de centrage d'orientation axiale. La gorge 26 est fermée vers l'extérieur par une rondelle d'application 27 métallique reconstituant l'autre flanc de la gorge 26. Cette rondelle d'application 27 est soumise à l'action d'une rondelle élastique 28 d'action axiale. Le plateau de réaction 20 est d'épaisseur réduite à sa périphérie interne et présente ainsi un voile interne 29 engagé dans la gorge 26 fermée par la rondelle 27.

L'alésage interne du voile 29 est centré par le fond de la gorge 26, tandis que la face interne du voile 29 est en contact avec la collerette du moyeu 21 et la face externe du voile 29 en contact avec la rondelle d'application 27. Cette face externe, tournée à l'opposé du plateau 10 est inclinée, de même que la périphérie externe de la rondelle 27, qui est en contact avec ladite face externe sous l'action de la rondelle élastique 28 qui est aussi inclinée à sa périphérie externe.

Cette rondelle 28 est du type Belleville.

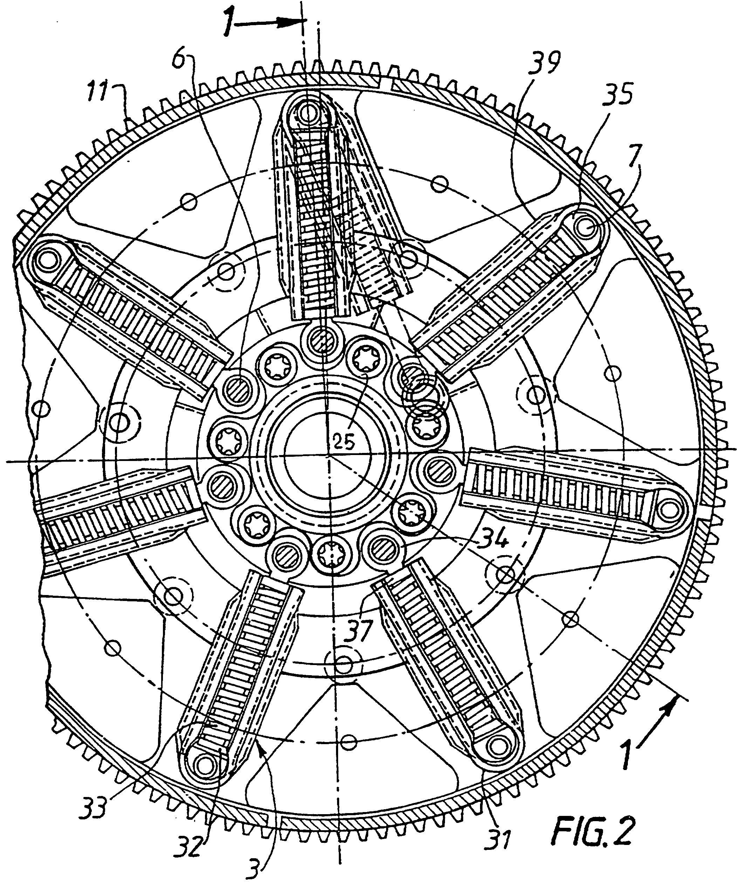

Les rondelles 27,28 présentent, à leur périphérie interne, une portion transversale par l'intermédiaire de laquelle elles sont fixées au moyeu 21 à l'aide d'organes de fixation 6 traversant lesdites rondelles. Ces organes 6 sont implantés sur une circonférence médiane de diamètre voisin, ici légèrement supérieur, de celui des passages 25, comme visible à la figure 2.

Les organes 6 alternent circonférentiellement avec les passages circulaires 25, ici de diamètre supérieur à celui des têtes des vis 12.

Il est ainsi formé un limiteur de couple qui, en cas de surcouple, de manière connue, permet une rotation relative entre le plateau 20 et le moyeu 21 pour notamment protéger les moyens élastiques d'amortissement 3.

Bien entendu, le voile 29 est traité pour lui donner la dureté nécessaire ainsi que le fond de centrage, la collerette du moyeu 21 et la rondelle 27.

Les moyens élastiques 3 comportent ici une pluralité de cassettes 3 élastiques réparties régulièrement circonférentiellement (figure 2) et implantées globalement radialement entre les deux masses 1,2. Les cassettes 3 sont disposées axialement entre le plateau 10 et la deuxième masse.

Chaque cassette 3 renferme au moins un ressort hélicoïdal 30a à l'intérieur d'un boîtier 31. Un piston 32 à tige 33 se déplace à l'intérieur du boîtier 31. La tige 33 présente, à son extrémité libre (à l'extérieur du boîtier 31), une pièce d'articulation, dite seconde pièce d'articulation 34.

Le boîtier 31 porte, à sa périphérie externe, une pièce d'articulation 35, dite première pièce d'articulation, interposée entre le sommet du boîtier 31 et le piston 32 en forme de rondelle. Ici deux ressorts à boudins concentriques 30a,30b sont prévus par cassette 3.

La première pièce d'articulation 35 forme une portion de rotule immobilisée par la forme du boîtier 31, qui ici est constitué à partir d'une tôle pliée en épingle à cheveux autour de la rotule 35 avec formation de nervures longitudinales 39. Les ressorts 30a,30b prennent appui sur le piston 32 solidaire par bouterollage de la tige 33 et sur une butée 37 traversée par la tige et fixée à l'extrémité libre du boîtier 31, ici par soudage.

Ainsi, après traversée de la butée 37 par la tige 33 et montage des ressorts 30a,30b, on soude la tige 33 au piston 32 et, enfin, la butée 37 au boîtier 31.

Les pièces d'articulation 34,35 sont chacune munies d'un alésage cylindrique formant palier de rotation.

Un tourillon 6 riveté à la seconde masse est engagé dans l'alésage interne de la seconde pièce d'articulation 34.

De même un tourillon 7, solidaire de la première masse 1, est engagé dans l'alésage interne de la première pièce d'articulation 35.

Ici des paliers lisses antifriction (non référencés) sont interposés entre les tourillons 6,7 et les alésages internes des seconde 34 et première 35 pièces d'articulation.

En variante on peut remplacer lesdits paliers par des roulements à aiguilles.

Ici les tourillons 7 sont engagés chacun à force à une de leurs extrémités axiales dans un trou non référencé, pratiqué à la périphérie externe du plateau 10 et, à leur autre extrémité, dans un trou d'une pièce métallique de fermeture en tôle 13 en forme de coupelle ouverte centralement.

Il est formé ainsi, grâce au plateau 10 et à la pièce de fermeture 13, une chape pour le montage des tourillons 7.

Cette chape permet également de positionner axialement les boîtiers 31.

La pièce 13 est fixée par des vis 14 au plateau 10 dans des zones épaisses en dehors des cassettes 3. En variante la pièce 13 est fixée par rivetage ou soudage au plateau 10.

Le plateau 10 présente ainsi des dégagements triangulaires pour les cassettes 3 (figure 2).

On appréciera que la pièce de fermeture 13 rigidifie le plateau 10 et qu'elle porte à fixation, ici par soudage, une pièce supplémentaire 55 s'étendant radialement au-dessus du rebord 22 pour augmentation de l'inertie de la première masse.

Ici les tourillons 6 forment les organes de fixation précités des rondelles 27,28 du limiteur de couple au moyeu 21.

Ainsi les cassettes 3 sont montées à articulation à la périphérie externe de la première masse 1 sur les tourillons 7 et à articulation à la périphérie interne de la seconde masse 2, ici sur le moyeu 21, par l'intermédiaire des tourillons 6.

La tige 33 traverse la butée 37 en forme de rondelle avec intervention d'un palier antifriction non référencé.

Les ressorts 30a,30b prennent appui sur le piston 32 et la butée 37 solidaire du boîtier 31, en sorte qu'ils travaillent en compression.

Au repos, les tourillons 6,7 sont alignés radialement.

Bien entendu, en variante les tourillons 6,7 peuvent être légèrement décalés circonférentiellement lorsque les deux masses 1,2 sont au repos.

Les ressorts 30a,30b travaillent donc globalement radialement en compression.

Lors d'un mouvement relatif entre les deux masses, les cassettes 3 s'inclinent, comme visible pour l'une d'elles en pointillés à la figure 2.

Il en résulte un déplacement du piston 32 dans le boîtier 31 et une compression des ressorts 30a,30b.

On notera que les tourillons 6 présentent une collerette au contact de la face interne du moyeu 21 tournée vers le plateau 10. Chaque tourillon 6 est délimité par ladite collerette prolongée par une partie cylindrique de plus petit diamètre traversant le moyeu 21 et se terminant par une queue de diamètre réduit traversant les rondelles 27,28.

Ensuite on mate cette queue, en sorte que les rondelles 27,28 sont emprisonnées entre la face externe du moyeu 21 et la partie sertie de la queue du tourillon 6.

Les cassettes 3 ont donc une grande longueur.

Dans le but, notamment, d'allonger encore la distance entre les tourillons 6,7 et de simplifier au moins l'une des masses 1,2, il est proposé de fixer par soudage directement l'une au moins des bagues du roulement 5 à sa masse 1,2 concernée.

Ce soudage intervient entre l'une des faces transversales de la bague concernée du roulement 5 et un épaulement transversal en vis-à-vis de la masse 1,2 concernée.

Dans les figures 1, le plateau 10 de la masse 1 présente, radialement en dessous des vis 12, une surépaisseur 15 formant la partie centrale (la périphérie interne) du plateau 10.

Cette surépaisseur 15, saillante axialement sur une faible longueur, présente une face d'extrémité transversale 16. C'est cette face transversale 16 qui est fixée à la face transversale en regard de la bague intérieure 8 du roulement 5.

La bague intérieure 8, ici massive, ou la face transversale 16 présente localement une saillie axiale, par exemple une pointe, pour contact local avant soudage avec l'autre face transversale. Grâce à cette saillie on réduit la zone de contact entre les deux faces, ce qui favorise l'écrasement de la matière.

Ici on soude également la bague extérieure 9 du roulement 5 à la deuxième masse. Le roulement 5 forme donc entretoise axiale entre les deux masses.

Plus précisément, on soude la bague 9 au moyeu 21 du limiteur de couple, qui est ici traité pour présenter la dureté voulue.

Le moyeu 21 présente une collerette d'orientation axiale 38, d'épaisseur moindre que la hauteur de la bague extérieure du roulement. La collerette 38 est issue de la face du moyeu 21 s'étendant vers le plateau 10 de la première masse 1. Elle s'étend axialement sur une faible longueur et présente, à son extrémité libre, la face transversale destinée selon l'invention à être liée par soudage à la face transversale en vis-à-vis de la bague externe 9 du roulement 5.

Bien entendu, la face transversale de la collerette 38 du moyeu 21 ou la face transversale en regard de la bague 9 présente une saillie axiale avant soudage destinée à être écrasée et chauffée lors du soudage par décharge du condensateur.

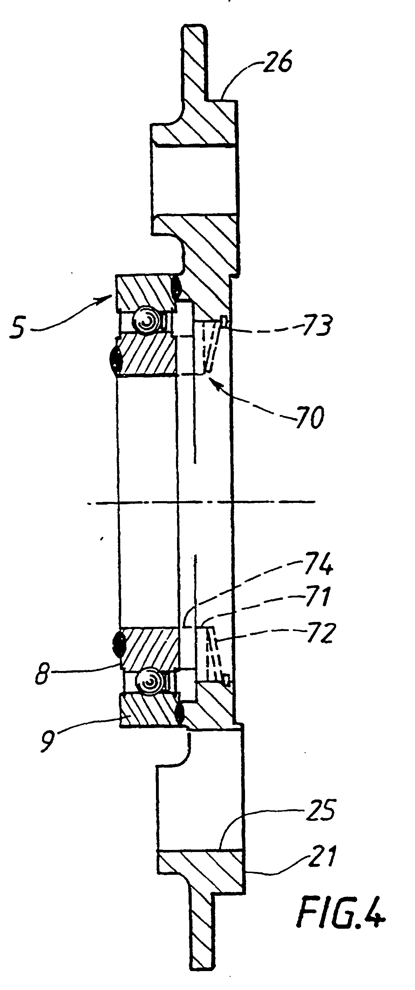

En variante on peut en profiter, si besoin est, pour implanter un dispositif de frottement 70 (figure 4 en pointillés) entre l'autre face transversale de la bague soudée et l'autre masse.

Par exemple, un dispositif de frottement peut intervenir entre la protubérance 15 et la face transversale de la bague extérieure 9.

Avantageusement, ce dispositif de frottement intervient entre le moyeu 21 et la bague intérieure 8 épaissie.

Le moyeu 21 présente, par exemple à sa périphérie interne, au moins une saillie axiale en forme de nervure non référencée.

Le dispositif de frottement comprend une rondelle d'application 71 comportant, à sa périphérie externe, une encoche de forme complémentaire à la nervure du moyeu pour liaison en rotation - avec mobilité axiale - de la rondelle d'application avec le moyeu 21.

De préférence au moins deux saillies réparties à 90° et deux encoches complémentaires sont prévues et on peut inverser les structures, le moyeu présentant par exemple les encoches.

La rondelle d'application 71 est soumise à l'action d'une rondelle élastique à action axiale 72 prenant appui sur une butée 73 solidaire axialement du moyeu 21, tel qu'un anneau élastique ou « circlips » engagé dans une gorge du moyeu.

Une rondelle de frottement 74 est alors intercalée axialement entre la rondelle d'application et la bague interne 8. Cette rondelle de frottement est par exemple collée ou rivetée sur la rondelle d'application. La rondelle élastique 72 sollicite la rondelle d'application vers la bague 8 pour serrage de la rondelle de frottement 74 entre la rondelle d'application 71 et la face transversale de la bague interne 8.

On appréciera que la surépaisseur 15 est relativement massive, en sorte que la première masse est centralement robuste.

Pour un encombrement axial donné au centre du double-volant, on peut diminuer l'encombrement radial au centre tout en augmentant l'épaisseur de la bague intérieure massive 8 du roulement à billes 5 du type standard, pour accroître la robustesse du roulement 5 et former une face de frottement pour le dispositif de frottement 70 précité.

Ici les moyens de frottement 4 sont implantes radialement en majeure partie au-dessus des tourillons 6. Ces moyens sont implantés au voisinage du plateau 10 offrant ici une face de friction 40 pour lesdits moyens 4, qui sont ainsi éloignés du plateau de réaction 10 et donc ménagés.

Conformément aux enseignements de l'invention, les moyens 4 comportent une rondelle de commande 41 liée en rotation au tourillon 6.

La rondelle 41 présente, à sa périphérie interne, une partie en équerre avec des pattes radiales trouées 42 d'orientation transversale et, à sa périphérie externe, des ondulations 43.

Les pattes 42 alternent circonférentiellement avec les vis 12 en sorte que la rondelle 41 est, au niveau des vis 12, implantée radialement au-dessus des vis 12 et présente des dégagements pour celles-ci.

Une partie inclinée 44 relie entre elles les parties périphériques 43,42.

Les tourillons 6 traversent les trous des pattes 42, en sorte que la rondelle 41 est liée en rotation, avec mobilité axiale, aux tourillons 6.

La partie inclinée 44 permet de créer le décalage axial voulu entre les parties périphériques 42,43 et d'éviter toute interférence avec les vis 12.

La partie périphérique 43 est une partie ondulée dont les sommets alternés 43A et 43B sont situés sur un même diamètre.

La partie périphérique 43 est admise par ses ondulations 43A, 43B à frotter, d'une part, sur la face 40 du plateau 10 tournée vers les cassettes 3 et le plateau de réaction 20 et, d'autre part, sur une pièce de forme creuse, en forme de couvercle, dite rondelle de fermeture 45. La face 40 peut être dotée d'un revêtement spécial ou appartenir à une rondelle solidaire du plateau 10.

Radialement, au-dessus de la rondelle de commande 41, est montée de manière concentrique une rondelle de frottement 46 présentant, à sa périphérie interne épaissie, des pattes 47.

La rondelle 46 qui entoure la rondelle 41 est avantageusement en matière synthétique et est soumise à l'action d'une rondelle élastique à action axiale 48, ici une rondelle Belleville, prenant appui sur la rondelle de fermeture pour solliciter la rondelle de frottement 46 au contact de la face 40 du plateau 10.

La rondelle Belleville 48 est solidaire en rotation de la rondelle de fermeture 45 présentant, à sa périphérie externe, un rebord globalement d'orientation transversale 50 dirigé radialement vers l'extérieur. Ce rebord 50 est doté, de place en place, de trous non référencés pour fixation de la rondelle 45, à l'aide de rivets 51, au plateau 10.

Le rebord radial 50 se raccorde au fond 52 par une zone annulaire d'orientation axiale 53. Le fond 52, troué centralement, est incliné en direction du plateau 10. Il existe donc une distance axiale DA1 plus importante entre la périphérie externe 45 du fond 52 et la face 40 du plateau 10, que la distance axiale DA2 entre la périphérie interne du fond 52 et ladite face 40.

Le fond 52 constitue donc une rondelle Belleville à action axiale.

La distance axiale entre deux sommets opposés des ondulations 43A, 43B de la rondelle de commande 40, ici métallique, est supérieure à la distance axiale entre la périphérie interne du fond 52 et la face 40.

La rondelle de fermeture 45 sollicite donc élastiquement la rondelle de commande 41 au contact, par sa périphérie externe 43, 43A, de la face 40 du plateau. La rondelle 41 est donc pincée élastiquement entre la face 40 et la périphérie interne de la rondelle de fermeture 45.

Les moyens de frottement à action axiale 4 s'étendent ici radialement au-dessus des têtes des vis 12 en étant portés en majeure partie par la première masse 1.

On notera que la partie inclinée 44 se raccorde à une partie d'orientation axiale (non référencée) que présente la rondelle 41 à sa périphérie interne:

Les moyens de frottement 4 sont compacts axialement et comportent un nombre de pièces réduit du fait, notamment, que la rondelle de commande 41, par sa périphérie externe 43 ondulée circonférentiellement 43A, 43B, vient alternativement en contact avec la face 40 et la rondelle 45.

La rondelle de fermeture 45 permet aussi de supprimer une pièce puisqu'elle est déformée par la rondelle de commande 41 et exerce une action élastique de serrage sur celle-ci.

On économise ainsi la présence d'une rondelle élastique.

Cette rondelle de fermeture 45 est emboutie localement. Ces emboutis 58 affectent localement le rebord 50, la zone 53 et la périphérie externe du fond 52.

Les emboutis 58 alternent circonférentiellement avec les trous de passage des rivets 51 de fixation de la rondelle 45 au plateau 10.

La rondelle Belleville 48 comporte, à sa périphérie externe, des pattes radiales inclinées 59 qui rentrent dans le creux des emboutis 58. La rondelle 48 est donc liée à rotation à la rondelle de fermeture, ici sans jeu circonférentiel, et appuie directement sur la rondelle de frottement 46, constituant ainsi également une rondelle d'application au bénéfice d'une réduction du nombre de pièces.

Cette rondelle de frottement 46 engrène, par ses pattes internes 47, avec les ondulations 43A, 43B de la partie externe 43 de la rondelle 41. A cet effet, chaque patte 47 est reçue entre deux sommets 43A et s'étend en regard d'un sommet 43B.

Cela est réalisé aisément à la faveur des ondulations.

Les ondulations forment donc, naturellement, des moyens d'entraînement pour la rondelle 46 entourant, avec sa rondelle 48 associée, la rondelle de commande 41. Les sommets des ondulations forment des surfaces actives de frottement.

Les pattes 47 pénètrent ici à jeu circcr.férentiel dans les creux 43B délimités par les ondulations 43A.

Après annulation du jeu, la rondelle 46 est entraînée en rotation par la rondelle 41 et frotte contre la face 40 et la rondelle 48. La rondelle 41 frotte ici en permanence contre la face 40 et la rondelle 45. Ainsi on filtre bien les vibrations.

En effet, la rondelle 41 est admise, par coopération avec la face 40 et la rondelle 45, à filtrer les vibrations dans le domaine du ralenti du moteur.

La rondelle de frottement 46, par coopération avec la face 40 et la rondelle 48, est admise à intervenir de manière étagée ou différée pour filtrer les vibrations dans le régime de marche du véhicule.

Les moyens de frottement 4, à deux rondelles de frottement concentriques 41, 46 sont économiques, simples, et font appel à un nombre réduit de pièces.

Bien entendu, la présente invention n'est pas limitée aux exemples de réalisation décrits.

Par exemple, les cassettes 3 peuvent être remplacées par des ressorts comportant, à chacune de leurs extrémités, une boucle pour montage sur les tourillons. Dans ce cas les ressorts radiaux travaillent en traction.

Les moyens élastiques d'amortissement 3 (et également d'accouplement) peuvent être à action circonférentielle de manière précitée.

En variante, ils peuvent être implantés à la périphérie externe du double-volant, comme décrit par exemple dans le document FR-A-2 662 760.

Les moyens d'accouplement peuvent être du type centrifuge comme décrit dans le document FR-A-2 044 978.

On notera que la constitution de la seconde masse 2 en deux parties 20,21 permet de souder facilement la bague externe.

Bien entendu, la présence du limiteur de couple n'est pas indispensable, la seconde masse pouvant être d'un seul tenant en étant par exemple en fonte.

La première masse peut être en acier.

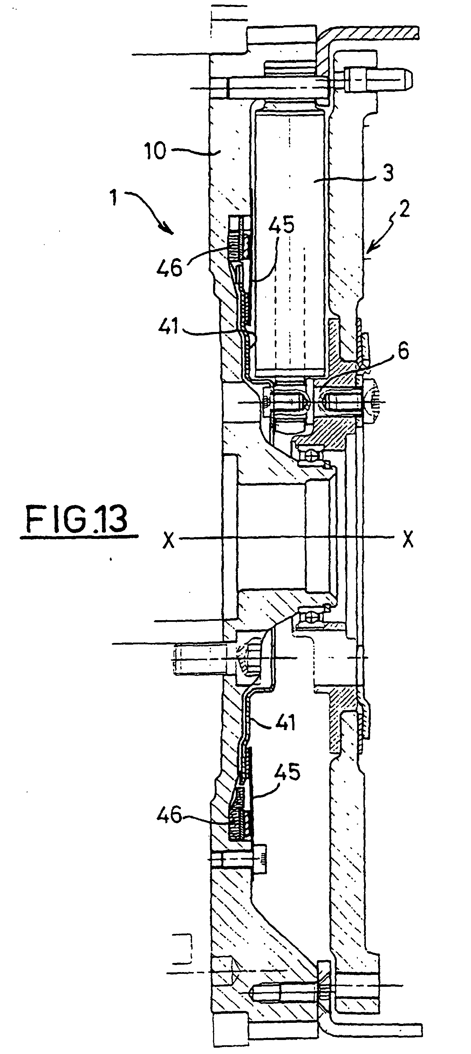

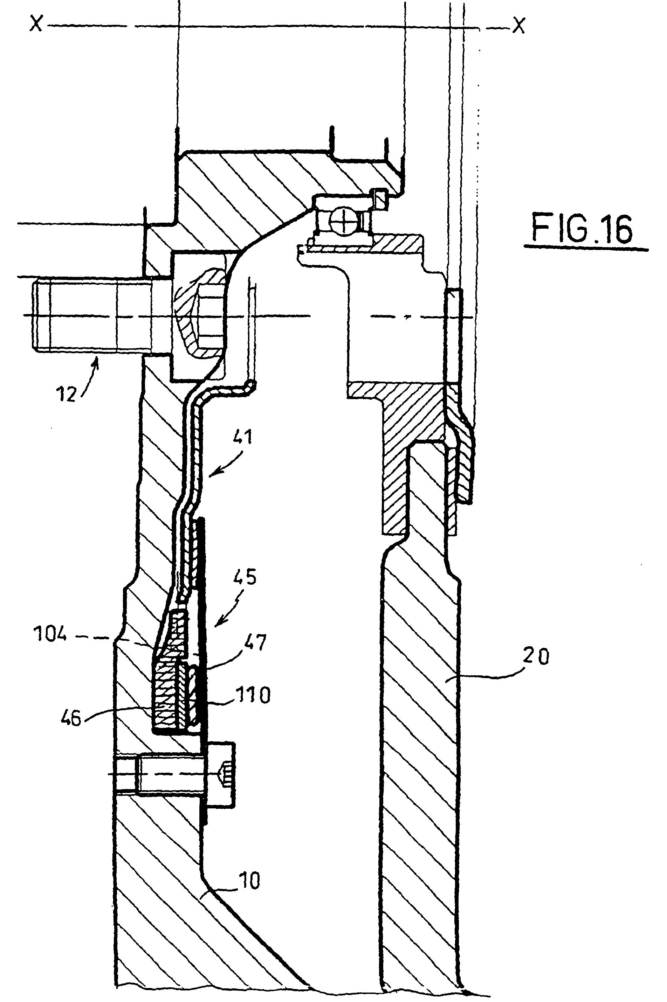

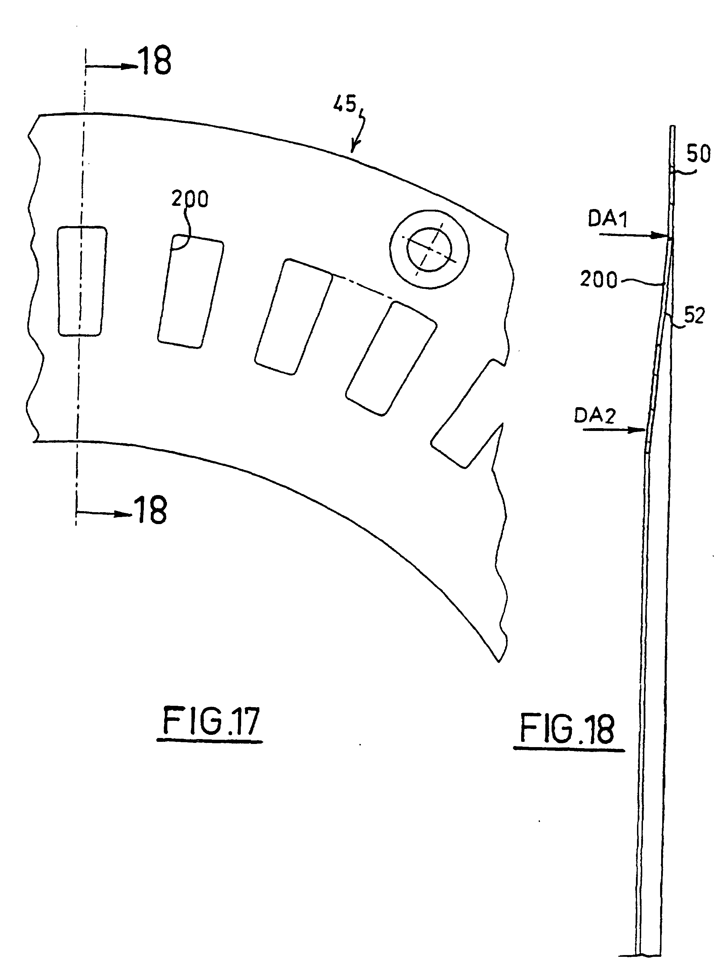

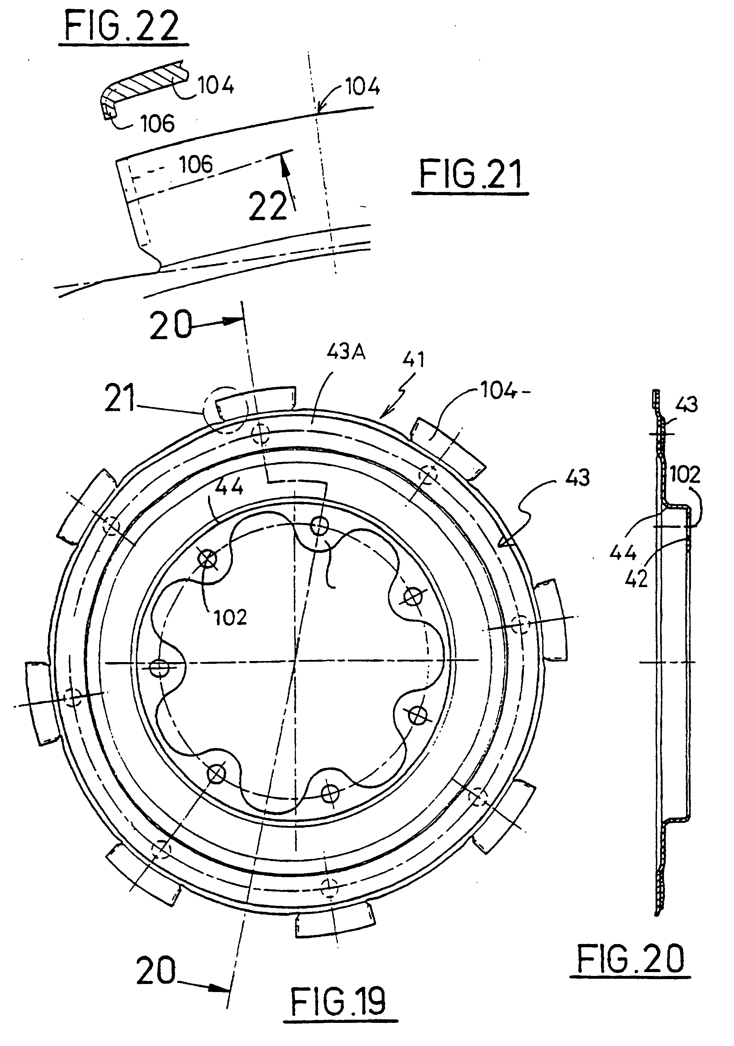

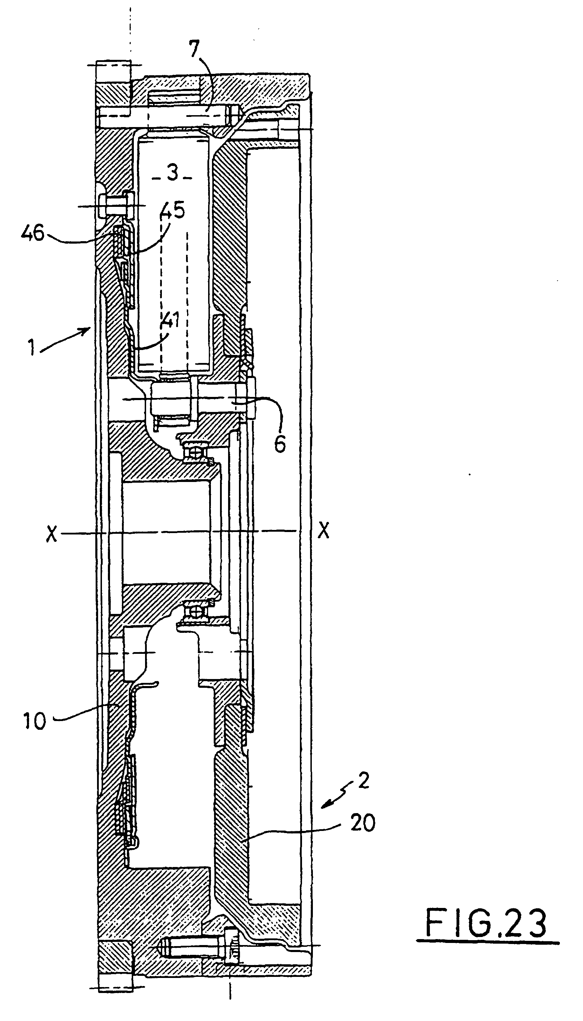

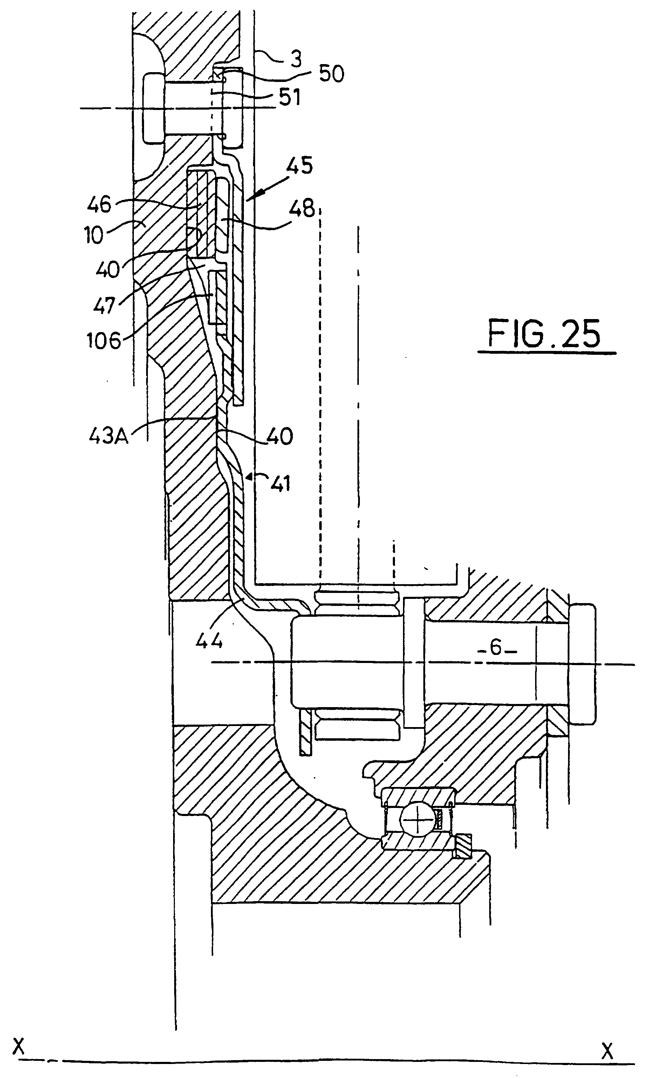

On décrira maintenant le deuxième mode de réalisation des moyens de frottement illustré aux figures 13 à 22 et une variante illustrée aux figures 23 à 27 sur lesquelles des éléments identiques, similaires ou analogues à ceux décrits précédemment sont désignés par les mêmes chiffres de référence.

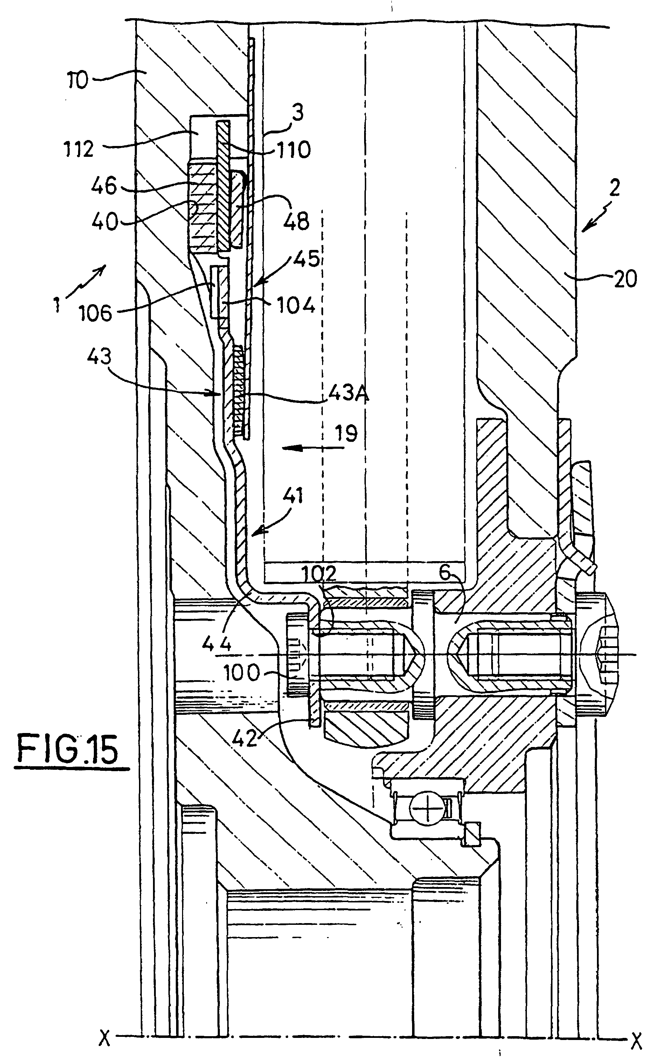

Dans le second mode de réalisation, et comme on peut le voir notamment aux figures 15 à 18, la conception de la rondelle de fermeture 45 est simplifiée et elle se présente sous la forme d'un feuillard mince dont la périphérie externe 500 est fixée au plateau 10 de la première masse tournante 1 par des vis 51, en lieu et place des rivets utilisés dans le cadre du premier mode de réalisation.

Pour accroître l'élasticité axiale de la rondelle 45, le fond 52 comporte une série d'évidements 200 répartis angulairement et en forme de fenêtres rectangulaires.

En ce qui concerne la rondelle de commande 41, sa périphérie interne 42 est ici entraînée en rotation par les axes 6 d'articulation ou tourillons 6 des cassettes d'amortissement 3, par l'intermédiaire de vis 100 qui traversent des trous 102 formés dans des pattes radiales internes de la zone périphérique interne 42 qui alternent avec des dégagements permettant l'accès aux vis 12.

Les vis 100 se vissent dans les axes ou tourillons 6. De même des vis non référencées se vissent à l'autre extrémité de l'axe pour retenir les rondelles non référencées du limiteur de couple.

Par rapport au premier mode de réalisation, la zone de raccordement inclinée 44 est ici réalisée sous la forme d'un coude.

La rondelle de commande 41 coopère par frottement avec la face en vis-à-vis de la portion périphérique radiale interne du fond 52 de la rondelle de commande 45 par l'intermédiaire d'un patin de friction annulaire 143A qui est un anneau de friction rapporté sur la face en vis-à-vis de la rondelle de commande 41 qui est ici métallique.

Au-delà de sa périphérie radiale externe 43, la rondelle de commande 41 comporte une série de pattes 104, réparties angulairement de manière régulière, qui s'étendent radialement vers l'extérieur et dont chacune comporte deux ailes 106 rabattues axialement en direction du plateau 10 de la première masse tournante 1.

Les pattes 104 avec leurs ailes 106 constituent des moyens d'engrènement en rotation entre la rondelle de commande 41 et la rondelle de frottement 46.

En effet, chacune des pattes 104, avec ses deux ailes 106, est reçue avec jeu circonférentiel entre deux pattes radiales internes consécutives 47 de la rondelle 46.

En ce qui concerne la conception proprement dite de la rondelle de frottement 46 telle qu'elle est illustrée aux figures 13 à 16, elle est réalisée sous la forme d'une rondelle moulée en matériau de frottement.

La rondelle élastique 48 à action axiale, qui est interposée entre la rondelle de fermeture 45 et la rondelle de frottement 46, agit sur cette dernière par l'intermédiaire d'une rondelle d'application 108 qui possède des pattes radiales externes 110 qui sont reçues, sans jeu circonférentiel, dans des logements complémentaires 112 formés dans le plateau 10 à la faveur d'une surépaisseur de celui-ci et qui débouchent axialement en direction des moyens d'amortissement 3.

On décrira maintenant le mode de réalisation illustré aux figures 23 à 27.

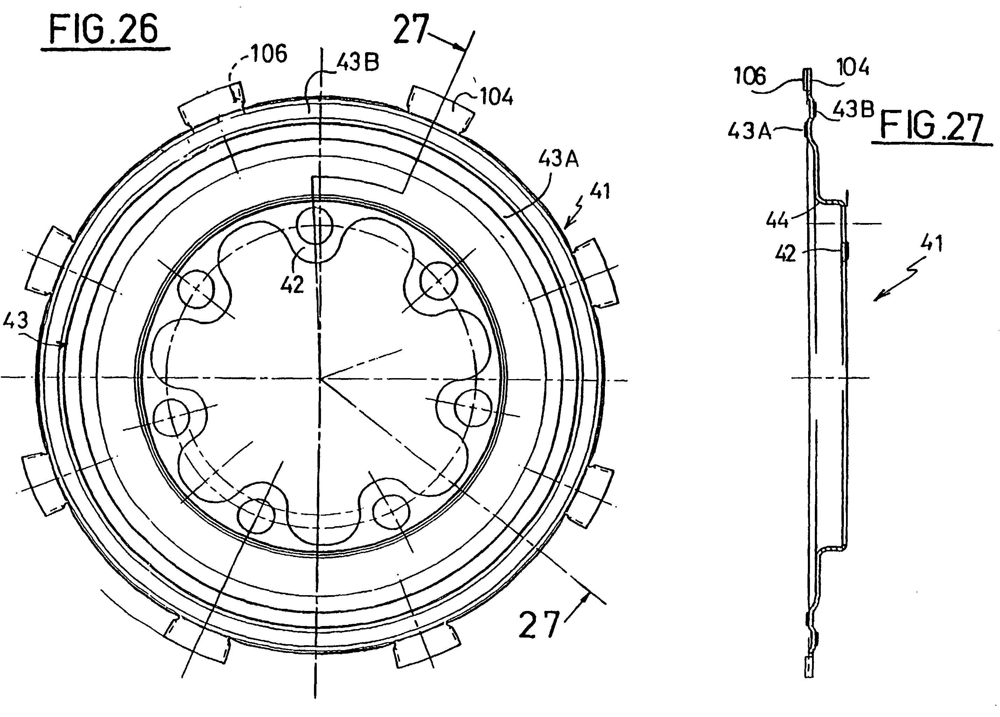

Dans ce mode de réalisation, la rondelle de commande 41 coopère avec la surface de frottement 40 et avec la rondelle de fermeture 45 par l'intermédiaire de deux pistes annulaires de frottement 243A et 243B qui sont décalées radialement l'une par rapport à l'autre et qui peuvent être chacune munies d'un patin annulaire de friction comme cela est illustré aux figures 26 et 27. La rondelle 41 est donc ondulée radialement.

L'engrènement entre la rondelle de commande 41 et la rondelle de frottement 46 est assuré par les mêmes moyens que ceux décrits en référence au précédent mode de réalisation.

La rondelle élastique à action axiale 48, interposée entre la rondelle de fermeture 45 et la rondelle de frottement 46, agit directement sur cette dernière, comme dans le cas du premier mode de réalisation, et elle coopère par ses pattes 59 avec des emboutis correspondants formés dans la rondelle de fermeture 45, ici encore comme dans le cas du premier mode de réalisation.

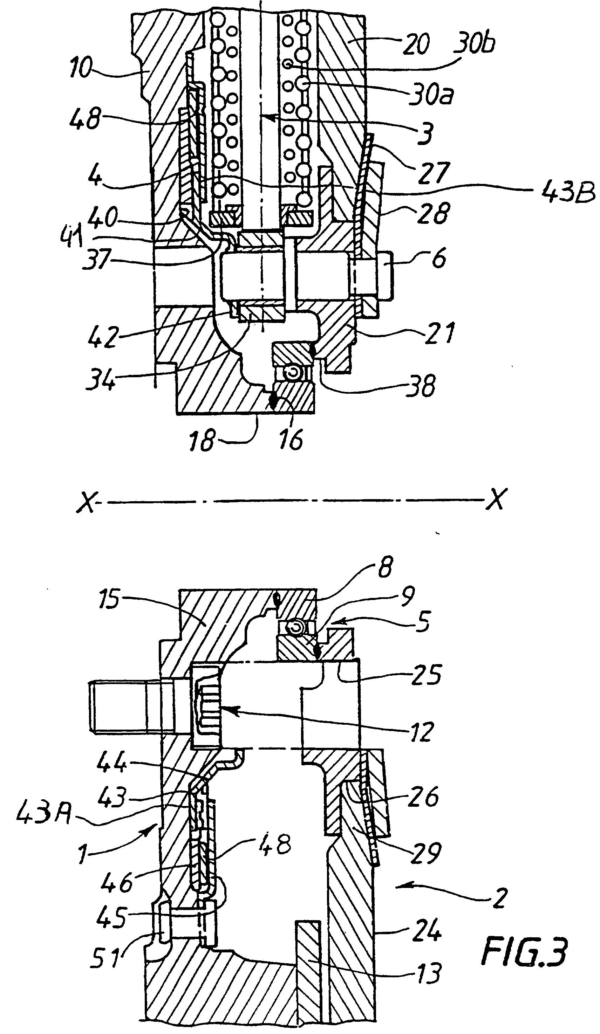

L'axe ou tourillon 6 est identique à celui des figures 1 et 3. La rondelle de fermeture est fixée par des rivets 51, comme à la figure 1, au plateau 10. Le fond 52 est identique à celui de la figure 1 et a donc une forme de rondelle Belleville.

Dans tous les cas la rondelle 46 entoure la rondelle 41 et engrène avec jeu avec la rondelle de commande 41 pincée élastiquement entre la face de frottement 40 et la rondelle de fermeture 41.

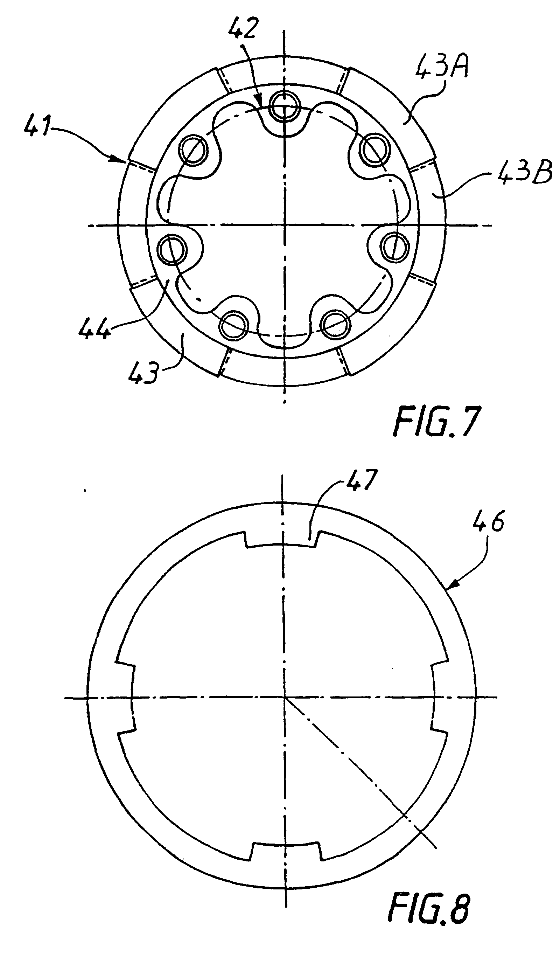

La rondelle de commande 41 présente donc des ondulations radiales (figure 27) ou circonférentielles (figure 7) et est soumise à l'action de la rondelle de fermeture 45 axialement élastique. La rondelle 45 par son fond 52 élastique sollicite axialement la rondelle de commande 41 en direction du plateau 10, les moyens de frottement 4 étant implantés axialement entre les cassettes 3 et le plateau 10.

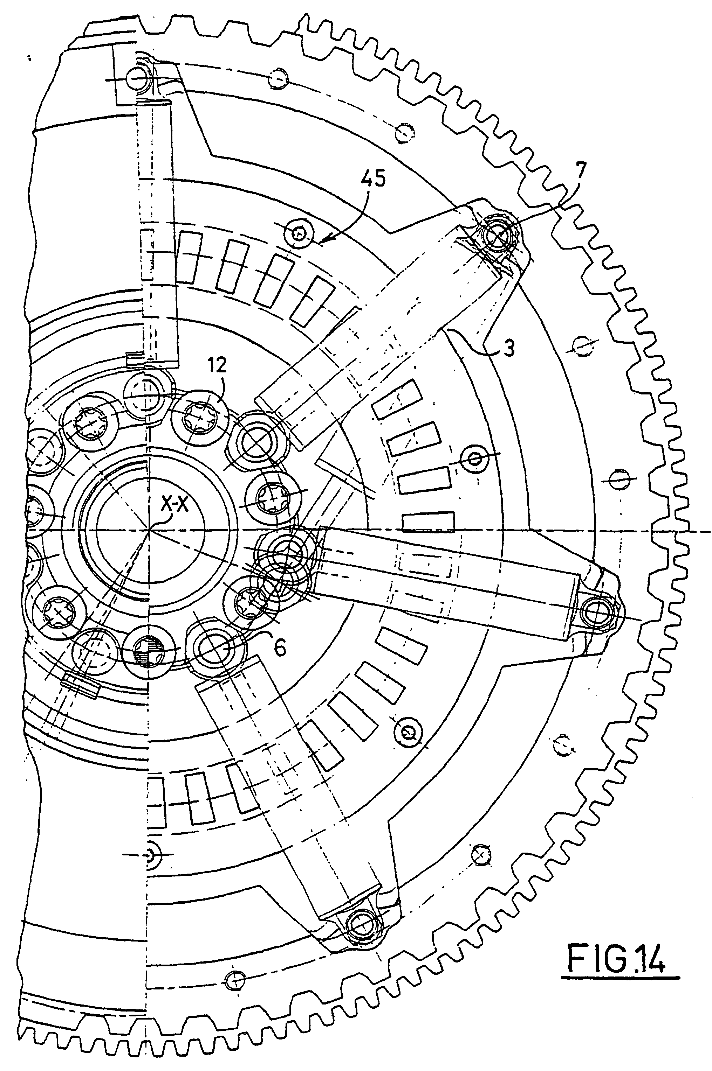

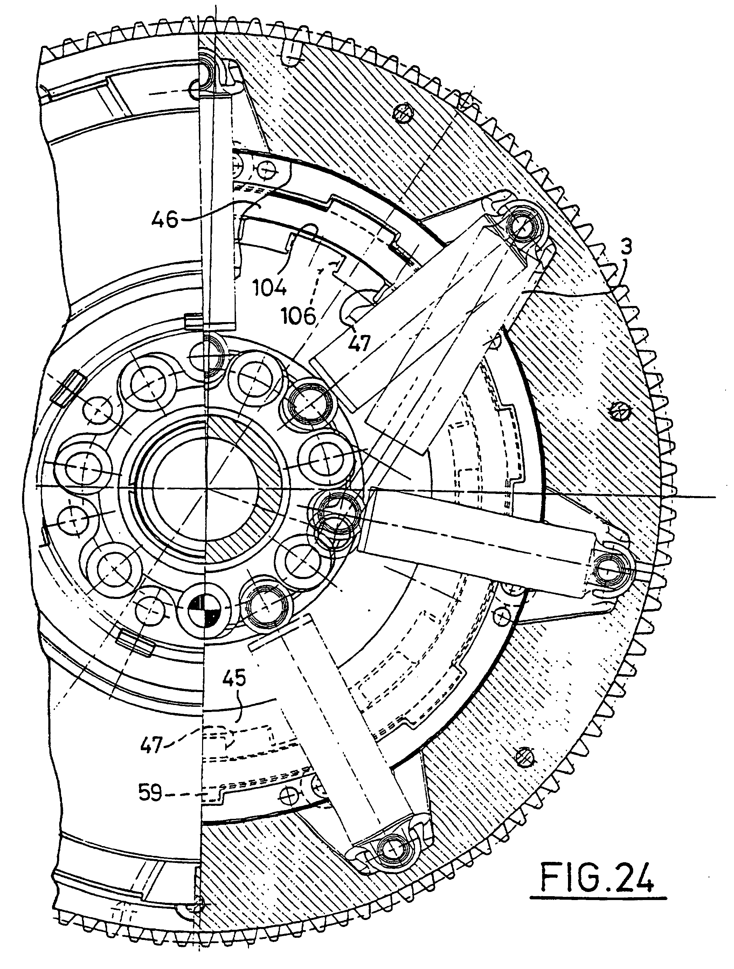

Dans les figures 14 et 24 le boîtier 31 est de forme tubulaire, la première pièce d'articulation 35 étant rapportée par soudage sur le boîtier 31.

## Revendications

1. Double-volant, comportant deux masses tournantes (1,2) coaxiales montées mobiles en rotation l'une par rapport à l'autre autour d'un axe (X-X) commun de symétrie axiale avec intervention entre les deux masses de moyens d'accouplement (3) et de moyens de frottement à action axiale (4) portés en majeure partie par l'une (1, 2) des masses, dans lequel une première des deux masses (1,2), est destinée à être liée en rotation à un arbre menant, tandis que la seconde des deux masses (2) est destinée à être liée en rotation de manière débrayable à un arbre mené et comporte un plateau (20) formant le plateau de réaction (20) d'un embrayage à friction et dans lequel la seconde masse (2) est montée rotative sur la première masse (1), et du type dans lequel les moyens de frottement (4) comportent :
- une rondelle de commande (41) dont une partie est admise à frotter sur une face de frottement (40) de ladite une (1,2) des masses et qui est liée en rotation à l'autre (2,1) des deux masses ;
- une rondelle de frottement (46) située radialement au-dessus de la rondelle de commande (41), qui engrène, avec jeu circonférentiel, avec la rondelle de commande (41), et qui est sollicitée au contact de ladite face de frottement (40) ; et
- une rondelle de fermeture (45) fixée à ladite une (1,2) des deux masses, la rondelle de commande (41) et la rondelle de frottement étant placées axialement entre ladite face de frottement (40) et la rondelle de fermeture (45), **caractérisé en ce que** la rondelle de commande (41,43) est admise à frotter, d'une part, sur ladite face de frottement (40) et, d'autre part, sur la rondelle de fermeture (45), et **en ce que** la rondelle de commande (41,43) est pincée élastiquement entre ladite face de frottement (40) et la rondelle de fermeture (45).

2. Double-volant selon la revendication 1, **caractérisé en ce que** la partie périphérique externe (43) de la rondelle de commande (41) est admise à frotter, d'une part, sur ladite face de frottement (40) et, d'autre part, sur la rondelle de fermeture (45) qui sollicite la rondelle de commande (41) par sa périphérie externe, la rondelle de commande (41) étant pincée élastiquement entre ladite face de frottement (40) et la périphérie interne de la rondelle de fermeture.

3. Double-volant selon la revendication 2, **caractérisé en ce que** la rondelle de commande (41) présente à sa périphérie externe deux surfaces actives annulaires de frottement (43A, 43B) décalées axialement, notamment des ondulations, qui sont admises à frotter d'une part sur ladite face de frottement (40) et, d'autre part, sur la rondelle de fermeture (45).

4. Double-volant selon la revendication 2, **caractérisé en ce que** la rondelle de fermeture (45) présente à sa périphérie externe un rebord, globalement d'orientation transversale, pour fixation de la rondelle de fermeture à ladite une (1,2) des deux masses et qui se raccorde, notamment par une zone d'orientation axiale (53), à un fond (52), globalement d'orientation radiale, troué centralement et qui est incliné en direction de ladite une (1, 2) des deux masses de manière qu'il existe une distance axiale (DA1) entre la périphérie externe du fond (52) et ladite face de frottement, qui est plus importante que la distance axiale (DA2) entre la périphérie interne du fond (52) et ladite face de frottement.

5. Double-volant amortisseur selon la revendication 4, **caractérisé en ce que** la distance axiale entre les deux surfaces actives de frottement (43A, 43B), notamment entre deux sommets opposés des ondulations, de la rondelle de commande (45) est supérieure à la distance axiale (DA2) entre la périphérie interne du fond (52) et ladite face de frottement (40).

6. Double-volant selon la revendication 1, **caractérisé en ce que** la rondelle de frottement (46) est soumise à l'action d'une rondelle élastique à action axiale (48) prenant appui directement sur la rondelle de fermeture (45) pour solliciter la rondelle de frottement au contact de ladite face de frottement (41).

7. Double-volant amortisseur selon la revendication 6, **caractérisé en ce que** la rondelle élastique (48) est solidaire en rotation de la rondelle de fermeture (45).

8. Double-volant amortisseur selon la revendication 6, **caractérisé en ce que** la rondelle élastique (48) comporte, à sa périphérie externe, des pattes radiales inclinées (59) qui rentrent dans des emboutis (58) de la rondelle de commande (45).

9. Double-volant amortisseur selon la revendication 3, **caractérisé en ce que** la rondelle de frottement (46) présente à sa périphérie interne des pattes (47) par lesquelles elle engrène avec des parties complémentaires de la rondelle de commande (41).

10. Double-volant amortisseur selon la revendication 9, **caractérisé en ce que** les zones actives de frottement de la rondelle de commande (41) sont des ondulations (43A,43B) dont les sommets forment les surfaces actives de frottement de la rondelle de commande (41) qui frottent en permanence contre ladite face de frottement (40) et contre la rondelle de fermeture (45), et **en ce que** les pattes (47) de la rondelle de frottement (46) engrènent avec les ondulations.

11. Double-volant amortisseur selon la revendication 9, **caractérisé en ce que** les zones actives de frottement (243A, 243B) de la rondelle de commande (41) sont deux zones annulaires décalées radialement, et **en ce que** la rondelle de commande comporte, radialement vers l'extérieur et au-delà de sa périphérie externe (43) des pattes (104,106) qui engrènent avec les pattes (47) de la rondelle de frottement (46).

12. Double-volant amortisseur selon la revendication 1, **caractérisé en ce que** ladite une des deux masses est ladite première masse (1).

## Patentansprüche

1. Zweimassenschwungrad, das zwei rotierende koaxiale Schwungmassen (1, 2) umfaßt, die im Verhältnis zueinander drehbeweglich um eine gemeinsame axiale Symmetrieachse (X-X) gelagert sind, wobei zwischen den beiden Schwungmassen Verbindungsmittel (3) und axial wirksame Reibmittel (4) eingefügt sind, die größtenteils an einer (1, 2) der Schwungmassen angebracht sind, wobei eine erste der beiden Schwungmassen (1, 2) zur drehfesten Verbindung mit einer treibenden Welle bestimmt ist, während die zweite der beiden Schwungmassen (2) dazu bestimmt ist, ausrückbar drehfest mit einer getriebenen Welle verbunden zu werden, und eine die Gegenanpreßplatte (20) einer Reibungskupplung bildende Platte (20) umfaßt, und wobei die zweite Schwungmasse (2) drehbar an der ersten Schwungmasse (1) gelagert ist, wobei die Reibmittel (4) folgende Teile umfassen:
- eine Betätigungsscheibe (41), von der ein Teil an einer Reibfläche (40) der besagten einen (1, 2) der Schwungmassen in Reibung treten kann und die drehfest mit der anderen (2, 1) der beiden Schwungmassen verbunden ist;
- eine radial außerhalb der Betätigungsscheibe (41) befindliche Reibscheibe (46), die mit Umfangsspiel an der Betätigungsscheibe (41) eingreift und die in Kontakt mit der besagten Reibfläche (40) beaufschlagt wird; und
- eine an der besagten einen (1, 2) der beiden Schwungmassen befestigte Verschlußscheibe (45), wobei die Betätigungsscheibe (41) und die Reibscheibe axial zwischen der besagten Reibfläche (40) und der Verschlußscheibe (45) angeordnet sind,
**dadurch gekennzeichnet,**
**daß** die Betätigungsscheibe (41, 43) einerseits an der besagten Reibfläche (40) und andererseits an der Verschlußscheibe (45) in Reibung treten kann,
und **daß** die Betätigungsscheibe (41, 43) zwischen der besagten Reibfläche (40) und der Verschlußscheibe (45) elastisch eingeklemmt ist.

2. Zweimassenschwungrad nach Anspruch 1, **dadurch gekennzeichnet, daß** der äußere Umfangsteil (43) der Betätigungsscheibe (41) einerseits an der besagten Reibfläche (40) und andererseits an der Verschlußscheibe (45) in Reibung treten kann, die die Betätigungsscheibe (41) durch ihren äußeren Umfang beaufschlagt, wobei die Betätigungsscheibe (41) zwischen der besagten Reibfläche (40) und dem inneren Umfang der Verschlußscheibe elastisch eingeklemmt ist.

3. Zweimassenschwungrad nach Anspruch 2, **dadurch gekennzeichnet, daß** die Betätigungsscheibe (41) an ihrem äußeren Umfang zwei axial versetzte, ringförmige Wirkreibflächen (43A, 43B) aufweist, insbesondere radiale oder umfangsmäßige Wellungen, die einerseits an der besagten Reibfläche (40) und andererseits an der Verschlußscheibe (45) in Reibung treten können.

4. Zweimassenschwungrad nach Anspruch 2, **dadurch gekennzeichnet, daß** die Verschlußscheibe (45) an ihrem äußeren Umfang eine insgesamt quer ausgerichtete Randleiste für die Befestigung der Verschlußscheibe an der besagten einen (1, 2) der beiden Schwungmassen aufweist, die sich, insbesondere durch einen axial ausgerichteten Bereich (53) an einen insgesamt radial ausgerichteten Boden (52) anschließt, der mittig gelocht ist und der in Richtung der besagten einen (1, 2) der beiden Schwungmassen geneigt ist, so daß ein axialer Abstand (DA1) zwischen dem äußeren Umfang des Bodens (52) und der besagten Reibfläche besteht, der größer als der axiale Abstand (DA2) zwischen dem inneren Umfang des Bodens (52) und der besagten Reibfläche ist.

5. Zweimassen-Dämpfungsschwungrad nach Anspruch 4, **dadurch gekennzeichnet, daß** der axiale Abstand zwischen den beiden Wirkreibflächen (43A, 43B), insbesondere zwischen den beiden gegenüberliegenden Scheiteln der Wellungen, der Betätigungsscheibe (45) größer als der axiale Abstand (DA2) zwischen dem inneren Umfang des Bodens (52) und der besagten Reibfläche (40) ist.

6. Zweimassenschwungrad nach Anspruch 1, **dadurch gekennzeichnet, daß** die Reibfläche (46) der Wirkung einer axial wirksamen Federscheibe (48) ausgesetzt ist, die direkt an der Verschlußscheibe (45) zur Anlage kommt, um die Reibscheibe in Kontakt mit der besagten Reibfläche (41) zu beaufschlagen.

7. Zweimassen-Dämpfungsschwungrad nach Anspruch 6, **dadurch gekennzeichnet, daß** die Federscheibe (48) drehfest mit der Verschlußscheibe (45) verbunden ist.

8. Zweimassen-Dämpfungsschwungrad nach Anspruch 6, **dadurch gekennzeichnet, daß** die Federscheibe (48) an ihrem äußeren Umfang geneigte radiale Ansätze (59) umfaßt, die in Vertiefungen (58) der Betätigungsscheibe (45) eindringen.

9. Zweimassen-Dämpfungsschwungrad nach Anspruch 3, **dadurch gekennzeichnet, daß** die Reibscheibe (46) an ihrem inneren Umfang Ansätze (47) aufweist, durch die sie an formschlüssigen Teilen der Betätigungsscheibe (41) eingreift.

10. Zweimassen-Dämpfungsschwungrad nach Anspruch 9, **dadurch gekennzeichnet, daß** die Wirkreibbereiche der Betätigungsscheibe (41) Wellungen (43A, 43B) sind, deren Scheitel die Wirkreibflächen der Betätigungsscheibe (41) bilden, die sich ständig an der besagten Reibfläche (40) und an der Verschlußscheibe (45) in Reibung befinden, und daß die Ansätze (47) der Reibscheibe (46) an den Wellungen eingreifen.

11. Zweimassen-Dämpfungsschwungrad nach Anspruch 9, **dadurch gekennzeichnet, daß** die Wirkreibbereiche (243A, 243B) der Betätigungsscheibe (41) zwei radial versetzte ringförmige Bereiche sind und daß die Betätigungsscheibe, radial nach außen und jenseits ihres äußeren Umfangs (43), Ansätze (104, 106) umfaßt, die an den Ansätzen (47) der Reibscheibe (46) eingreifen.

12. Zweimassen-Dämpfungsschwungrad nach Anspruch 1, **dadurch gekennzeichnet, daß** die besagte eine der beiden Schwungmassen die besagte erste Schwungmasse (1) ist.

## Claims

1. A double flywheel, comprising two coaxial rotatable masses (1, 2) which are mounted for rotary movement of one with respect to the other about a common axial axis of symmetry (X-X), with, interposed operatively between two masses, coupling means (3) and axially acting friction means (4), which are carried mostly by one (1, 2) of the masses, wherein a first one of the two masses (1, 2) is adapted to be coupled in rotation to a driving shaft, while the second of the two masses (2) is adapted to be coupled in rotation disconnectably to a driven shaft and includes a plate (20) constituting the reaction plate (20) of a friction clutch, and wherein the second mass (2) is mounted for rotation on the first mass (1), and of the type in which the friction means (4) comprise:
- a control ring (41), a portion of which is arranged to engage frictionally on a friction face (40) of the said one (1, 2) of the masses, and which is coupled in rotation to the other one (2, 1) of the two masses;
- a friction ring (46) situated radially outwardly of the control ring (41), which meshes with the control ring (41) with a circumferential clearance, and which is biased into contact with the said friction face (40) ; and
- a closure ring (45) fixed to the said one (1, 2) of the two masses, the control ring (41) and the friction ring being placed axially between the said friction face (40) of the closure ring (45), **characterised in that** the control ring (41, 43) is arranged to engage frictionally, firstly on the said friction face (40), and secondly on the closure ring (45), and **in that** the control ring (41, 43) is gripped elastically between the said friction face (40) and the closure ring (45).

2. A double flywheel according to Claim 1,
**characterised in that** the outer peripheral portion (43) of the control ring (41) is arranged to engage frictionally, firstly on the said friction face (40) and secondly on the closure ring (45), which biases the control ring (41) through its outer periphery, the control ring (41) being gripped elastically between the said friction face (40) and the inner periphery of the closure ring.

3. A double flywheel according to Claim 2 ,
**characterised in that** the control ring (41) has at its outer periphery two annular working friction surfaces (43A, 43B), in particular corrugations, which are offset axially and which are arranged to engage frictionally, firstly on the said friction face (40) and secondly on the closure ring (45).

4. A double flywheel according to Claim 2,
**characterised in that** the closure ring (45) has at its outer periphery a generally transversely oriented flange, for fastening the friction ring to the said one (1, 2) of the two masses, and which is joined, in particular by an axially oriented zone (53), to a generally radially oriented base (52), which is centrally perforated and which is inclined towards the said one (1, 2) of the two masses in such a way that there exists, between the outer periphery of the base (52) and the said friction face, an axial distance (DA1) which is greater than the axial distance (DA2) between the inner periphery of the base (52) and the said friccion face.

5. A damped double flywheel according to Claim 4,
**characterised in that** the axial distance between the two working friction surfaces (43A, 43B), in particular between two opposed top surfaces of the corrugations, of the control ring (45) is greater than the axial distance (DA2) between the inner periphery of the base (52) and the said friction face (40).

6. A double flywheel according to Claim 1,
**characterised in that** the friction ring (46) is subjected to the action of an axially acting resilient ring (48) which bears directly on the closure ring (45) so as to bias the friction ring into contact with the said friction face (40).

7. A damped double flywheel according to Claim 6,
charactarised in that the resilient ring (48) is fixed to the closure ring (45) for rotation therewith.

8. A damped double flywheel according to Claim 6,
**characterised in that** the resilient ring (48) includes at its outer periphery inclined radial lugs (59) which engage within press-formed projecting elements (58) of the control ring (45).

9. A damped double flywheel according to Claim 3,
**characterised in that** the friction ring (46) has at its inner periphery lugs (47) by means of which it meshes with complementary portions of the control ring (41).

10. a damped double flywheel according to Claim 9,
**characterised in that** the working friction surfaces of the control ring (41) are corrugations (43A, 43B), the top surfaces of which constitute the working friction surfaces of the control ring (41), which are in permanent frictional contact against the said friction face (40) and against the closure ring (45), and **in that** the lugs (47) of the friction ring (46) mesh with the corrugations.

11. A damped double flywheel according to Claim 9,
**characterised in that** the working friction zones (243A, 243B) of the control ring (41) are two radially offset annular zones, and **in that** the control ring includes, radially outwardly and beyond its outer periphery (43), lugs (104, 106) which mesh with the lugs (47) of the friction ring (46).

12. A damped double flywheel according to Claim 1,
**characterised in that** the said one of the two masses is the said first mass (1).
